# EUROPÄISCHE PATENTSCHRIFT

(11) **EP 1 060 140 B1**
(45) Veröffentlichungstag und Bekanntmachung des Hinweises auf die Patenterteilung: **13.03.2002**
(21) Anmeldenummer: 98964518.9
(22) Anmeldetag: 15.12.1998
(51) Int. Cl.: C03C 17/36

(54) **THERMISCH HOCHBELASTBARER, WÄRMEREFLEKTIERENDER BELAG**
HIGHLY HEAT-RESISTANT, HEAT-REFLECTING COATING
REVETEMENT THERMOREFLECHISSANT, PRESENTANT UNE GRANDE RESISTANCE THERMIQUE

(30) Priorität: 25.02.1998 DE 19807930
(43) Veröffentlichungstag der Anmeldung: 20.12.2000
(73) Patentinhaber: INTERPANE Entwicklungs- und Beratungsgesellschaft mbH & Co. KG, D-37697 Lauenförde (DE)
(72) Erfinder: MÜGGENBURG, Thomas, CH-4922 Bützberg (CH)
(74) Vertreter: Körfer, Thomas, Dipl.-Phys.
(86) Internationale Anmeldenummer: EP9808205
(87) Internationale Veröffentlichungsnummer: WO9943626

(56) Entgegenhaltungen:
- EP-A- 0 599 071
- DE-A- 3 503 851
- DE-A- 3 906 374
- GB-A- 1 307 642
- GB-A- 1 419 036
- US-A- 4 413 877

## Beschreibung

Die Erfindung betrifft einen thermisch hochbelastbaren, wärmereflektierenden Belag für ein Substrat aus transparentem Material sowie ein Verfahren zur Herstellung dieses Belags auf dem Substrat.

Ein thermisch hoch belastbarer, wärmereflektierender Belag nach dem Oberbegriff des Anspruchs 1 sowie ein Verfahren zu dessen Herstellung nach dem Oberbegriff des Anspruchs 11 ist z. B. aus der DE 195 33 053 C1 bekannt. Aus dieser Druckschrift geht ein auf einem transparenten Substrat aufgebrachtes Schichtsystem hervor, wobei eine Silberschicht, die infrarote Wärmestrahlung reflektiert, zwischen zwei entspiegelnden Metalloxid-Schichten angeordnet ist. Die Verwendung einer Silberschicht als Funktionsschicht hat gegenüber anderen Schichtsystemen den Vorteil, daß bei einer hohen Transmission im sichtbaren Spektralbereich eine hohe Reflexion im infraroten Spektralbereich, also im Bereich der Wärmestrahlung, erfolgt. Ferner kann unter Verwendung einer Silberschicht als Funktionsschicht ein in Durchsicht und Reflexion farblich neutral wirkendes Schichtsystem realisiert werden. Eine oder mehrere Silberschichten aufweisende Schichtsysteme werden daher bei der Fahrzeugverglasung und der Gebäudeverglasung zunehmend eingesetzt.

Insbesondere beim Einsatz der Schichtsysteme bei der Fahrzeugverglasung müssen die Substrate, in der Regel Glasscheiben, häufig einer Wärmebehandlung bei verhältnismäßig hoher Temperatur unterzogen werden, beispielsweise um die Substrate zu biegen oder thermisch vorzuspannen. Dabei sind Prozeßtemperaturen von mehr als 600 °C üblich. Da die Substrate üblicherweise vor der Wärmebehandlung beschichtet werden. ist auch das Schichtsystem diesen hohen Temperaturen ausgesetzt. Dies stellt hohe Anforderungen an das Schichtsystem. Auch bei der Verarbeitung zu Verbundglas treten derart hohe Prozeßtemperaturen auf.

Bei der Wärmebehandlung kommt es zu einer Zerstörung der Silberschicht durch Oxidation, wenn diese nicht besonders geschützt wird. Dadurch erhält der Belag ein mattes. fleckiges Aussehen. Die Veranderungen der Silberschicht werden durch Sauerstoff hervorgerufen, der bei den hohen Prozeßtemperaturen aus den Metalloxid-Schichten oder aus der Umgebung in die Silberschicht eindringt. Um das nachteilige Eindringen von Sauerstoff in die Silberschicht zu verringern, wurde in der DE 195 33 053 C1 bereits vorgeschlagen, die Silberschicht zwischen zwei dünnen Metallschichten einzubetten, die die Aufgabe haben, den in Richtung auf die Silberschicht eindringenden Sauerstoff unter Bildung von Metalloxiden zu binden. Diese, die Silberschicht umgebenden Metallschichten, werden auch als Opfer-Metallschichten bezeichnet. In der DE 196 07 611 C1 wird vorgeschlagen, für die die Silberschicht umgebenden Opfer-Metallschichten Zink und als dielektrische Entspiegelungsschichten Zinkoxid zu verwenden.

Der Anwendung solcher, die Silberschicht umgebenden Metallschichten ist jedoch Grenzen gesetzt, da mit zunehmender Gesamtdicke der Metallschichten die Transmission verringert wird, wenn die Opfer-Metallschichten bei der Wärmebehandlung nicht vollständig aufoxidiert werden. Ferner führt das zusätzliche Aufbringen der Opfer-Metallschichten zu erhöhten Fertigungskosten, da zusätzlich zu der Silberschicht zwei weitere Metallschichten aufgebracht werden müssen und z. B. hei Verwendung der Kathodenzerstäubung zum Aufbringen der Metallschichten zwei zusätzlicher Sputterkathoden erforderlich sind.

Der Erfindung liegt daher die Aufgabe zugrunde, einen thermisch hochbelastbaren. wärmereflektierenden Belag sowie ein Verfahren zu dessen Herstellung anzugeben, bei welchem der Fertigungsaufwand verringert und gleichzeitig ein wirkungsvoller Schutz der Silber enthaltenden Funktionsschicht gewährleistet ist.

Die Aufgabe wird hinsichtlich des thermisch hochbelastbaren, wärmereflektierenden Belags durch die Merkmale des Anspruchs 1 und hinsichtlich des Herstellungsverfahrens durch die Merkmale des Anspruchs 11 gelöst.

Der Erfindung liegt die Erkenntnis zugrunde, daß anstatt der Einbettung der Silberschicht in Opfer-Metallschichten oder Pufferschichten es auch möglich ist, das Opfermetall. vorzugsweise Aluminium, dem Silber beizulegieren. Als Metall-Schicht wird daher eine Silberlegierung verwendet, die neben Silber eine weitere Metallkomponente mit hoher Affinität zu Sauerstoff enthält. Die weitere Metallkomponente neigt daher zur schnellen Oxidation. Bei der Erhitzung des Schichtsystems, z. B. zur Erzielung einer thermischen Vorspannung, oxidiert daher diese zusätzliche Metallkomponente und bildet jeweils einen Oxid-Film im Grenzbereich der Metallschicht, der das Silber vor einer weiteren Oxidation wirkungsvoll schützt.

Die Ansprüche 2 bis 10 beinhalten vorteilhafte Weiterbildungen der Erfindung.

Als zulegierte Metallkumponente eignen sich die im Anspruch 2 angegebenen Metalle. Bevorzugt wird jedoch Aluminium verwendet. Die weitere Metallkomponente, insbesondere das Aluminium. hat an der Legierung entsprechend Anspruch 3 vorzugsweise einen Anteil von 5 at% (Atomprozent) bis 20 at% (Atomprozent).

Vorzugsweise ist entsprechend Anspruch 4 zwischen der das Silber beinhaltenden ersten Metall-Schicht und der darüber angeordneten zweiten Metalloxid-Schicht bzw. Deckschicht eine zweite Metall-Schicht als Pufferschicht angeordnet. Diese Schicht wirkt haftvermittelnd und hat eine zusätzliche Schutzfunktion für die darunter liegende Silberlegierung. Diese zweite Metallschicht bzw. Puffer-Schicht kann entsprechend Anspruch 5 aus Niobium oder aus einer Legierung oder Mischung aus Nickel und Chrom bestehen. Es ist jedoch auch vorteilhaft, für diese zweite Metallschicht entsprechend Anspruch 6 die dem Silber in der ersten Metallschicht beilegierte Metallkomponente, insbesondere also Aluminium zu verwenden.

Die Metalloxid-Schichten bestehen entsprechend Anspruch 7 vorzugsweise aus Titanoxid (TiOx). Zinnoxid (SnOx), Zinkoxid (ZnOx) oder einem transparenten Nitrid, wie Silizium-Nitrid (SiN). Bei Verwendung eines Nitrids kann auf die zweite Metall-Schicht verzichtet werden. Es eignen sich jedoch auch alle anderen als solches bekannten hochtemperaturbeständigen, dielektrischen Schichten. Die dielektrischen Schichten dienen vor allem der Entspiegelung aber auch als haftvermittelnde Schicht zur Oberfläche des Substrats bzw. als abdeckende Schutzschicht.

Die erste, die Silberlegierung beinhaltende Metall-Schicht hat entsprechend Anspruch 8 vorzugsweise eine Dicke von 10 nm bis 25 nm. Die Schichtdicke wird vorzugsweise so gewählt, daß im Infrarotbereich bei einer Wellenlänge von 20 µm eine Reflexion von 85 % bis 90 % erreicht wird.

Die zweite Metall-Schicht bzw. Pufferschicht hat entsprechend Anspruch 9 vorzugsweise eine Dicke von 1 nm bis 3 nm. Die Metalloxid-Schichten haben entsprechend Anspruch 10 vorzugsweise eine Dicke von 25 nm bis 35 nm. besonders bevorzugt etwa 30 nm.

Nachfolgend wird ein Ausführungsbeispiel der Erfindung unter Bezugnahme auf die Zeichnung näher beschrieben. In der Zeichnung zeigen:
- Fig. 1: einen Schnitt durch ein Ausführungsbeispiel des auf einem Substrat aufgebrachten erfindungsgemäßen Belags vor dem Erhitzen und
- Fig. 2: den auf dem Substrat aufgebrachten Belag entsprechend Fig. 1 in einer geschnittenen Darstellung nach dem Erhitzen.

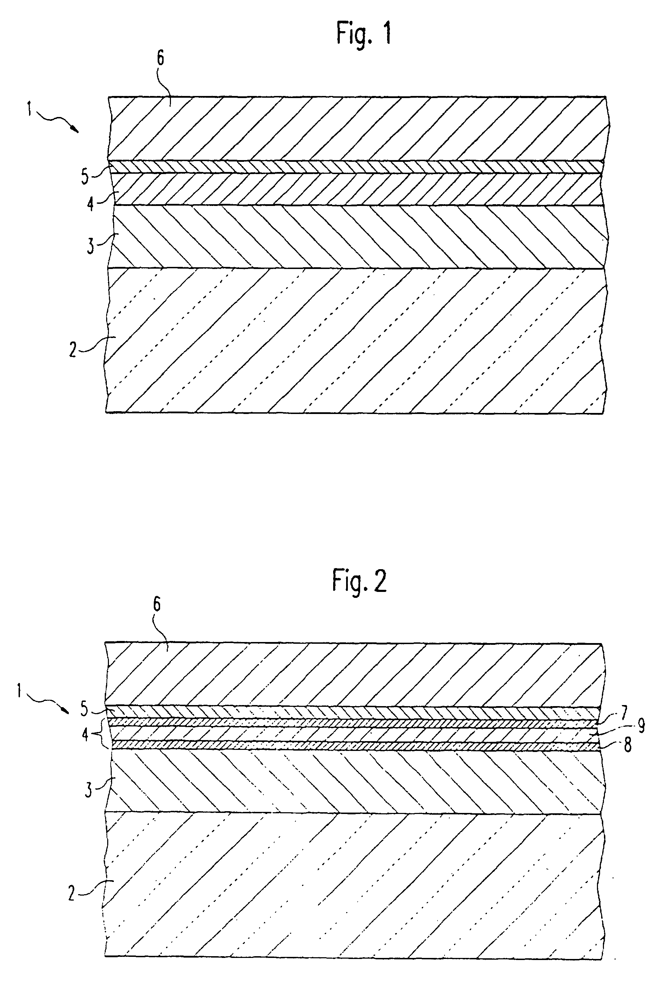

Wie aus Fig. 1 erkennbar, ist der erfindungsgemäße thermisch hoch belastbare, wärmereflektierende Belag 1 auf einem Substrat 2 aus transparentem Material aufgebracht. Bei dem transparentem Substrat 2 handelt es sich in der Regel um Glasscheiben, insbesondere Float-Glasscheiben. Geeignet sind jedoch auch Kunststoffscheiben oder Kunststoffolien, insbesondere solche Kunststoffolien, die bei der Herstellung von Verbundglas zwischen den Glasscheiben eingefügt werden.

Auf das transparente Substrat 2 wird zunächst eine erste Metalloxid-Schicht 3 aufgebracht. Diese Schicht dient sowohl als haftvermittelnde Schicht als auch zur Entspiegelung. Die Dicke dieser Schicht beträgt 25 nm bis 35 nm. vorzugsweise etwa 30 nm. Diese dielektrische Metalloxid-Schicht 3 besteht vorzugsweise aus Titanoxid (TiOx) oder aus Zinnoxid (SnOx), wobei Titanoxid (TiOx) besonders bevorzugt ist. Es eignen sich jedoch auch alle anderen als solches bekannten Materialsysteme für dielektrische Schichten, wie z. B. Zinkoxid (ZnOx) oder em Nitrid, z. B. Siliziumnitrid (SiN), sofern sie hochtemperaturbeständig sind. Die dielektrische Metall-Oxidschicht 3 wird, wie auch alle anderen noch zu beschreibenden Schichten vorzugsweise durch DC Magnetronsputtern hergestellt. Es eignet sich jedoch auch grundsätzlich jedes andere PVD- oder CVD-Verfahren. Die Metalloxid-Schicht 3 wird vorzugsweise reaktiv in einer Sauerstoffatmosphäre abgeschieden. Die Schichtdicke ist so bemessen, daß eine wirkungsvolle breitbandige Entspiegelung im sichtbaren Spektralbereich eintritt.

Auf die erste Metalloxid-Schicht 3 wird eine erste Metallschicht 4, vorzugsweise ebenfalls durch DC Magnetronsputtern, aufgebracht. Die Metallschicht 4 ist die eigentliche Funktionsschicht, die die Reflexion der infraroten Wärmestrahlung bewirkt. Erfindungsgemäß handelt es sich bei dieser ersten Metall-Schicht nicht um eine reine Silberschicht, sondern um eine Silber-Legierung, die neben Silber (Ag) eine weitere Metallkomponente mit hoher Affinitat zu Sauerstoff (O) enthält. Geeignete Metalle für diese zweite Metallkomponente sind z. B. Aluminium (Al), Titan (Ti). Wolfram (W). Tantal (Ta), Zirconium (Zr), Hafnium (Hf). Cer (Ce), Vanadium (V), Nickel (Ni). Chrom (Cr), Zink (Zn), Niobium (Nb). Selbstverständlich ist auch eine Mischung dieser Metalle geeignet. Es hat sich jedoch herausgestellt, daß Aluminium (Al) besonders geeignet ist. Die weitere Metallkomponente, vorzugsweise das Aluminium (Al), hat in der Silberlegierung einen Anteil von vorzugsweise zwischen 5 at% (Atomprozent) bis 20 at% (Atomprozent). Die Dicke der ersten Metall-Schicht 4 wird so gewählt, daß im Infrarotbereich bei einer Wellenlänge von 20 µm eine Reflexion von vorzugsweise zwischen 85 % bis 90 % erreicht wird. Versuche haben gezeigt, daß die bevorzugte Dicke für die erste Metall-Schicht 4 zwischen 10 nm und 25 nm liegt.

Vorzugsweise wird auf die als Funktionsschicht dienende erste Metall-Schicht 3 eine zweite Metall-Schicht 4, ebenfalls vorzugsweise durch DC Magnetronsputtern, aufgebracht. Diese zweite Metall-Schicht 5 verhindert eine Zerstörung der Silber-Legierung bei dem Aufbringen der abschließenden zweiten Metalloxid-Schicht 6. Wenn durch das Aufbringen der zweiten Metalloxid-Schicht eine Zerstörung oder Beeinträchtigung der ersten Metall-Schicht 4 nicht droht oder vernachlässigbar ist, kann die zweite Metall-Schicht 5 auch entfallen, wodurch der Fertigungsaufwand weiter verringert wird. Insbesondere bei der Verwendung eines Nitrids für die Metalloxid-Schicht 6, wie z. B. Siliziumnitrid (SiN) hat sich gezeigt, daß auf diese zweite Metallschicht 5 verzichtet werden kann.

Diese als Pufferschicht dienende zweite Metall-Schicht 5 besteht vorzugsweise aus Niobium (Nb) oder einer Legierung oder Mischung aus Nickel (Ni) und Chrom (Cr). Daneben eignen sich jedoch auch alle anderen bekannten Schutzschichtmaterialien, wie Aluminium (Al), Titan (Ti), Wolfram (W), Tantal (Ta), Zirconium (Zr), Chrom (Cr), Vanadium (V) oder Germanium (Ge). Besonders geeignet ist Aluminium (Al) für die Pufferschicht auch deshalb, da hierdurch ein zu geringer Gehalt von Aluminium in der bevorzugten Silber-Aluminium-Legierung kompensiert werden kann. Allgemein besteht die Pufferschicht in diesem Fall vorzugsweise aus dem der Silberlegierung zulegierten Metall. Die Dicke der zweiten Metall-Schicht 5 liegt vorzugsweise im Bereich zwischen 1 nm und 3 nm. Das Abscheiden der ersten Metall-Schicht 4 und der zweiten Metall-Schicht 5 erfolgt vorzugsweise in einer Schutzgasatmosphäre, z. B. in einer Argon-Atmosphäre.

Auf die als Pufferschicht dienende zweite Metall-Schicht 5 wird vorzugsweise ebenfalls durch DC Magnetronsputtern in einer Sauerstoffatmosphäre die zweite dielektrische Metalloxid-Schicht 6 aufgebracht. Auch die zweite Metalloxid-Schicht 6 besteht vorzugsweise aus Titanoxid (TiOx) oder Zinnoxid (SnOx), wobei Titanoxid besonders bevorzugt ist. Grundsätzlich ist jedoch auch jedes andere Metalloxid, z. B. Zinkoxid (ZnOx) geeignet oder auch ein Nitrid, wie Siliziumnitrid (SiN). Auch die zweite Metalloxid-Schicht 6 dient einer Entspiegelung der Metall-Schicht 4 im sichtbaren Spektralbereich. wobei die Reflexion hei einer Wellenlänge von 500 nm beispielsweise etwa 5 % beträgt. Die Dicke der zweiten Metalloxid-Schicht 6 liegt zwischen 25 um und 35 nm, vorzugsweise bei etwa 30 nm. Sowohl das für die erste Metalloxid-Schicht 3 als auch das für die zweite Metalloxid-Schicht 6 verwendete Metalloxid ist im sichtbaren Spektralbereich nahezu absorptionsfrei.

Vor der noch zu beschreibenden Erhitzung liegt die Reflexion in einem schmalbandigen Bereich unter 10 % und die maximale Transmission im sichtbaren Spektralbereich liegt bei etwa 80 %.

Nachfolgend wird das beschriebene Schichtsystem einer Erhitzung unterworfen, wie es bei einem thermischen Vorspannprozeß bei der Weiterverarbeitung zu Sicherheitsglas aber auch z. B. zum Biegen des Substrats 2 notwendig ist. Bei diesem Erhitzungsprozeß werden die optischen Eigenschaften des Belags 1 signifikant verändert.

Ein Schnitt durch das Substrat 2 und den erfindungsgemäßen Belag 1 nach der Erhitzung ist in Fig. 2 schematisch dargestellt. Wie aus Fig. 2 erkennbar, bildet sich bei der thermischen Behandlung jeweils an der Grenzfläche der ersten Metall-Schicht 4 zu der darunterliegenden Schicht 3 und der darüberliegenden Schicht 5 ein dünner Oxidfilm 7 bzw. 8. Wenn die Metallkomponente mit hoher Affinität zu Sauerstoff in der Silber-Legierung das bevorzugte Aluminium ist, bestehen die Oxid-Filme 7 und 8 aus Aluminiumoxid. Während der thermischen Behandlung wird von den beiden Metalloxid-Schichten 3 und 6 bzw. von der Umgebung in die erste Metall-Schicht 4 eindringender Sauerstoff von dieser weiteren Metallkomponente, z. B. von dem vorzugsweise verwendeten Aluminium, eingefangen und oxidiert zu einem entsprechenden Oxid-Film 7 bzw. 8. Zwischen den beiden Oxid-Filmen 7 und 8 verbleibt ein Silber-Film 9. der im wesentlichen eine elektrische Leitfähigkeit hat. wie er von Silber ohne Zulegierung einer weiteren Komponente, insbesondere ohne Zulegierung von Aluminium. bekannt ist. Das Silber (Ag) ist nun zwischen den beiden Oxid-Filmen 7 und 8 eingebettet, die es vor einer weiteren Zerstörung wirkungsvoll schutzen.

Ein wesentlicher Vorteil der erfindungsgemäßen Zulegierung einer werteren Metallkomponente zu dem Silber - anstatt dem aus dem Stand der Technik bekannten Abscheiden zweier während der thermischen Behandlung zu Oxidschichten oxidierender Opfermetall-Schichten - besteht darm. daß nur das Abscheiden einer einzigen Schicht 4 anstelle der drei Schichten Opfermetallschicht-Silberschicht-Opfermetallschicht notwendig ist. Dadurch werden der Fertigungsaurwand und die Fertigungskosten erheblich reduziert. Ferner ist das erfindungsgemäße Verfahren prozeßtechnisch wesentlich besser zu beherrschen. da bei der Verwendung von Opfermetallschichten die Schichtdicke dieser Opfermetallschichten kritisch zu bemessen ist.

Die Erhitzung bzw, thermische Behandlung führt schließlich zu einem Belag 1 mit den geforderten optischen Eigenschaft, die aut der verbesserten Leittähigkert sowie der geringeren Schichtdicke des Silberfilms 9 beruhen. So haben Versuche gezeigt, daß sich mit dem erfindungsgemäßen Verfahren bei der Verwendung einer Silber-Aluminium-Legierung eine Transmission im optischen Spektralbereich von 90 %, eine Reflexion im infraroten Spektralbereich von mehr als 95 % und eine breitbandige Entspiegelung im sichtbaren Spektralbereich erreichen läßt.

Die Erfindung ist nicht auf das dargestellte Ausführungsbeispiel beschränkt. Wie bereits erwähnt, kann als weitere Metallkomponente dem Silber auch ein anderes Metall mit hoher Affinität zu Sauerstoff zulegiert werden. Selbstverständlich ist es auch möglich, anstatt einer einzigen Metall-Schicht 4 mit einer Silberlegierung mehrere, jeweils durch eine Metalloxid-Schicht 3, 6 getrennte Metall-Schichten als Funktionsschichten zu verwenden.

## Patentansprüche

1. Thermisch hoch belastbarer, wärmereflektierender Belag (1) für ein Substrat (2) aus transparentem Material mit
einer auf das Substrat (2) aufgebrachten, ersten Metalloxid-Schicht oder transparenten, hochtemperaturbeständigen, dielektrischen Nitrid-Schicht (3),
einer auf der ersten Metalloxid-Schicht bzw. Nitrid-Schicht (3) aufgebrachten, ersten Metall-Schicht (4) aus einer Silber-Legierung,
einer über der ersten Metall-Schicht (4) aufgebrachten, zweiten Metalloxid-Schicht oder transparenten, hochtemperaturbeständigen, dielektrischen Nitrid-Schicht (6),
**dadurch gekennzeichnet,**
**daß** die erste Metall-Schicht (4) aus einer Silber-Legierung besteht, die neben Silber (Ag) eine weitere Metallkomponente mit hoher Affinität zu Sauerstoff (O) enthält, die in den Grenzbereichen der ersten Metall-Schicht (4) zu Oxid-Filmen (7, 8) oxidiert vorliegt, so daß das Silber (Ag) der ersten Metall-Schicht (4) zwischen den Oxid-Filmen (7, 8) eingebettet ist, erhältlich durch Erhitzung des Belags (1).

2. Thermisch hoch belastbarer, wärmereflektierender Belag nach Anspruch 1,
**dadurch gekennzeichnet,**
**daß** die weitere Metallkomponente aus Aluminium (Al), Titan (Ti), Wolfram (W), Tantal (Ta), Zirconium (Zr), Hafnium (Hf), Cer (Ce), Vanadium (V), Nickel (Ni), Chrom (Cr), Zink (Zn), Niobium (Nb) oder einer Mischung dieser Metalle, vorzugsweise aus Aluminium (Al), besteht.

3. Thermisch hoch belastbarer, wärmereflektierender Belag nach Anspruch 1 oder 2,
**dadurch gekennzeichnet,**
**daß** die weitere Metallkomponente an der Silber-Legierung einen Anteil von 5 at% bis 20 at% hat.

4. Thermisch hoch belastbarer, wärmereflektierender Belag nach einem der Ansprüche 1 bis 3,
**dadurch gekennzeichnet,**
**daß** zwischen der ersten Metall-Schicht (4) und der zweiten Metalloxid-Schicht (6) eine zweite Metall-Schicht (5) als Puffer-Schicht angeordnet ist.

5. Thermisch hoch belastbarer, wärmereflektierender Belag nach Anspruch 4,
**dadurch gekennzeichnet,**
**daß** die zweite Metall-Schicht (5) aus Niobium (Nb) oder einer Legierung oder Mischung aus Nickel (Ni) und Chrom (Cr) besteht.

6. Thermisch hoch belastbarer, wärmereflektierender Belag nach Anspruch 4,
**dadurch gekennzeichnet,**
**daß** die zweite Metall-Schicht (5) aus der neben Silber (Ag) weiteren Metallkomponenten der ersten Metall-Schicht (4) besteht.

7. Thermisch hoch belastbarer, wärmereflektierender Belag nach einem der Ansprüche 1 bis 6,
**dadurch gekennzeichnet,**
**daß** die Metalloxid-Schichten aus Titanoxid (TiOx), Zinnoxid (SnOx), Zinkoxid (ZnOx) oder einem transparenten Nitrid, insbesondere Siliziumnitrid (SiN) bestehen.

8. Thermisch hoch belastbarer, wärmereflektierender Belag nach einem der Ansprüche 1 bis 7,
**dadurch gekennzeichnet,**
**daß** die erste Metall-Schicht (4) eine Dicke von 10 nm bis 25 nm hat.

9. Thermisch hoch belastbarer, wärmereflektierender Belag nach einem der Ansprüche 4 oder 6,
**dadurch gekennzeichnet,**
**daß** die zweite Metall-Schicht (5) eine Dicke von 1 nm bis 3 nm hat.

10. Thermisch hoch belastbarer, wärmereflektierender Belag nach einem der Ansprüche 1 bis 9,
**dadurch gekennzeichnet,**
**daß** die Metalloxid-Schichten (3, 6) eine Dicke von 25 nm bis 35 nm, vorzugsweise etwa 30 nm, haben.

11. Verfahren zum Herstellen eines thermisch hoch belastbaren, wärmereflektierenden Belags (1) auf einem transparenten Substrat (2) mit folgenden Verfahrensschritten:
- Aufbringen einer ersten Metalloxid-Schicht oder transparenten, hochtemperaturbeständigen, dielektrischen Nitrid-Schicht (3) auf dem transparenten Substrat (2),
- Aufbringen einer Silber (Ag) enthaltenden Metall-Schicht (4) auf der ersten Metalloxid-Schicht bzw. Nitrid-Schicht (3),
- Aufbringen einer zweiten Metalloxid-Schicht oder transparenten, hochtemperaturbeständigen, dielektrischen Nitrid-Schicht (6) über der Metall-Schicht (4),
- Erhitzen des Substrats (2) und des auf dem Substrat (2) aufgebrachten Belags (1),
**dadurch gekennzeichnet,**
**daß** als Metall-Schicht (4) eine Silber-Legierung aufgebracht wird, die neben Silber (Ag) eine weitere Metallkomponente mit hoher Affinität zu Sauerstoff (O), insbesondere aus Aluminium (Al), enthält, und
**daß** das Erhitzen hinsichtlich Temperatur und Zeitdauer so erfolgt, daß die Metallkomponente mit hoher Affinität zu Sauerstoff in den Grenzbereichen der Metall-Schicht (4) zu Oxid-Filmen (7, 8), insbesondere Aluminiumoxid-Filmen, oxidiert und das Silber (Ag) der Metall-Schicht (4) zwischen den Oxid-Filmen (7, 9) eingebettet ist.

## Claims

1. Highly heat-resistant, heat-reflecting coating (1) for a substrate (2) of transparent material having
a first metallic oxide layer or transparent, dielectric nitride layer (3) with high temperature stability, applied to the substrate (2),
a first metal layer (4) of a silver alloy, applied to the first metallic oxide layer or nitride layer (3),
a second metallic oxide layer or transparent, dielectric nitride layer (6) with high temperature stability, applied over the first metal layer (4),
**characterised in that**
the first metal layer (4) consists of a silver alloy that contains, in addition to silver (Ag), a further metal component having a high affinity to oxygen (O), which component, in the boundary regions of the first metal layer (4), is present in a form oxidised to oxide films (7, 8), so that the silver (Ag) of the first metal layer (4) is embedded between the oxide films (7, 8), obtainable by heating the coating (1).

2. Highly heat-resistant, heat-reflecting coating according to claim 1,
**characterised in that**
the further metal component consists of aluminium (Al), titanium (Ti), tungsten (W), tantalum (Ta), zirconium (Zr), hafnium (Hf), cerium (Ce), vanadium (V), nickel (Ni), chromium (Cr), zinc (Zn), niobium (Nb) or a mixture of those metals, preferably of aluminium (Al).

3. Highly heat-resistant, heat-reflecting coating according to claim 1 or 2,
**characterised in that**
the amount of the further metal component in the silver alloy is from 5 at% to 20 at%.

4. Highly heat-resistant, heat-reflecting coating according to any one of claims 1 to 3,
**characterised in that**
a second metal layer (5) is arranged as a buffer layer between the first metal layer (4) and the second metallic oxide layer (6).

5. Highly heat-resistant, heat-reflecting coating according to claim 4,
**characterised in that**
the second metal layer (5) consists of niobium (Nb) or of an alloy or mixture of nickel (Ni) and chromium (Cr).

6. Highly heat-resistant, heat-reflecting coating according to claim 4,
**characterised in that**
the second metal layer (5) consists of the further metal component of the first metal layer (4) in addition to silver (Ag).

7. Highly heat-resistant, heat-reflecting coating according to any one of claims 1 to 6,
**characterised in that**
the metallic oxide layers consist of titanium oxide (TiOx), tin oxide (SnOx), zinc oxide (ZnOx) or a transparent nitride, especially silicon nitride (SiN).

8. Highly heat-resistant, heat-reflecting coating according to any one of claims 1 to 7,
**characterised in that**
the first metal layer (4) has a thickness of from 10 nm to 25 nm.

9. Highly heat-resistant, heat-reflecting coating according to any one of claims 4 or 6,
**characterised in that**
the second metal layer (5) has a thickness of from 1 nm to 3 nm.

10. Highly heat-resistant, heat-reflecting coating according to any one of claims 1 to 9,
**characterised in that**
the metallic oxide layers (3, 6) have a thickness of from 25 nm to 35 nm, preferably approximately 30 nm.

11. Method of producing a highly heat-resistant, heat-reflecting coating (1) on a transparent substrate (2), having the following process steps:
- application of a first metallic oxide layer or transparent dielectric nitride layer (3) with high temperature stability to the transparent substrate (2),
- application of a metal layer (4) containing silver (Ag) to the first metallic oxide layer or nitride layer (3),
- application of a second metallic oxide layer or transparent, dielectric nitride layer (6) with high temperature stability over the metal layer (4),
- heating of the substrate (2) and the coating (1) applied to the substrate (2),
**characterised in that**
there is applied as the metal layer (4) a silver alloy that contains, in addition to silver (Ag), a further metal component having a high affinity to oxygen (O), especially of aluminium (Al), and
the heating is carried out, in respect of temperature and duration, in such a manner that the metal component having a high affinity to oxygen oxidises in the boundary regions of the metal layer (4) to form oxide films (7, 8), especially aluminium oxide films, and the silver (Ag) of the metal layer (4) is embedded between the oxide films (7, 9).

## Revendications

1. Revêtement thermoréfléchissant, à haute résistance thermique (1) pour un substrat (2) constitué par un matériau transparent avec
une première couche d'oxyde métallique ou couche de nitrure diélectrique, résistant aux hautes températures transparente (3) appliquée sur le substrat (2),
une première couche métallique (4) constituée par un alliage d'argent appliquée sur la première couche d'oxyde métallique ou couche de nitrure (3),
une seconde couche d'oxyde métallique ou couche de nitrure diélectrique, résistant aux hautes températures, transparente (6) appliquée sur la première couche métallique (4),
**caractérisé en ce que** la première couche métallique (4) consiste en un alliage d'argent qui, outre l'argent (Ag), contient un composant métallique supplémentaire à haute affinité pour l'oxygène (O), qui est sous forme oxydée en films d'oxyde (7, 8) dans les domaines limites de la première couche métallique (4), de sorte que l'argent (Ag) de la première couche métallique (4) est inclus entre les films d'oxyde (7, 8), pouvant être obtenu par chauffage du revêtement (1).

2. Revêtement thermoréfléchissant, à haute résistance thermique selon la revendication 1 **caractérisé en ce que** le composant métallique supplémentaire consiste en aluminium (Al), titane (Ti), tungstène (W), tantale (Ta), zirconium (Zr), hafnium (Hf), cérium (Ce), vanadium (V), nickel (Ni), chrome (Cr), zinc (Zn), niobium (Nb) ou en un mélange de ces métaux, de préférence en aluminium (Al).

3. Revêtement thermoréfléchissant, à haute résistance thermique selon la revendication 1 ou 2 **caractérisé en ce que** le composant métallique supplémentaire participe à l'alliage d'argent dans une proportion de 5 % at. à 20 % at.

4. Revêtement thermoréfléchissant, à haute résistance thermique selon l'une des revendications 1 à 3 **caractérisé en ce qu'**une seconde couche métallique (5) est disposée comme couche tampon entre la première couche métallique (4) et la seconde couche d'oxyde métallique (6).

5. Revêtement thermoréfléchissant, à haute résistance thermique selon la revendication 4 **caractérisé en ce que** la seconde couche métallique (5) consiste en niobium (Nb) ou en un alliage ou mélange de nickel (Ni) et de chrome (Cr).

6. Revêtement thermoréfléchissant, à haute résistance thermique selon la revendication 4 **caractérisé en ce que** la seconde couche métallique (5) consiste en le composant métallique supplémentaire, autre que l'argent (Ag), de la première couche métallique (4).

7. Revêtement thermoréfléchissant, à haute résistance thermique selon l'une des revendications 1 à 6 **caractérisé en ce que** les couches d'oxyde métallique consistent en oxyde de titane (TiOx), en oxyde d'étain (SnOx), en oxyde de zinc (ZnOx) ou en un nitrure transparent, en particulier en nitrure de silicium (SiN).

8. Revêtement thermoréfléchissant, à haute résistance thermique selon l'une des revendications 1 à 7 **caractérisé en ce que** la première couche métallique (4) a une épaisseur de 10 nm à 25 nm.

9. Revêtement thermoréfléchissant, à haute résistance thermique selon l'une des revendications 4 et 6 **caractérisé en ce que** la seconde couche métallique (5) a une épaisseur de 1 nm à 3 nm.

10. Revêtement thermoréfléchissant, à haute résistance thermique selon l'une des revendications 1 à 9 **caractérisé en ce que** les couches d'oxyde métallique (3, 6) ont une épaisseur de 25 nm à 35 nm, de préférence d'environ 30 nm.

11. Procédé de fabrication d'un revêtement thermoréfléchissant, à haute résistance thermique (1) sur un substrat transparent (2) comportant les étapes de procédé suivantes :
- application d'une première couche d'oxyde métallique ou couche de nitrure diélectrique résistant aux hautes températures, transparente (3) sur le substrat transparent (2),
- application d'une couche métallique (4) contenant de l'argent (Ag) sur la première couche d'oxyde métallique ou couche de nitrure (3),
- application d'une seconde couche d'oxyde métallique ou couche de nitrure diélectrique, résistant aux hautes températures, transparente (6) sur la couche métallique (4),
- chauffage du substrat (2) et du revêtement (1) appliqué sur le substrat (2),
**caractérisé en ce qu'**un alliage d'argent qui, outre l'argent (Ag), contient un composant métallique supplémentaire à haute affinité pour l'oxygène (O), en particulier l'aluminium (Al), est appliqué comme couche métallique (4), et
**en ce que** le chauffage se déroule, concernant la température et la durée, de telle manière que le composant métallique à haute affinité pour l'oxygène est oxydé dans les domaines limites de la couche métallique (4) en films d'oxyde (7, 8), en particulier en films d'oxyde d'aluminium, et l'argent (Ag) de la couche métallique (4) est inclus entre les films d'oxyde (7, 9).
